# EUROPÄISCHE PATENTSCHRIFT

(11) **EP 2 162 816 B1**
(45) Veröffentlichungstag und Bekanntmachung des Hinweises auf die Patenterteilung: **18.04.2012**
(21) Anmeldenummer: 08784684.6
(22) Anmeldetag: 10.07.2008
(51) Int. Cl.: G05G 1/10, G05G 5/03, G05G 5/06, G06F 3/033

(54) **DREHSTELLER MIT VERÄNDERBAREM RASTVERLAUF**
ROTATING ACTUATOR WITH A VARIABLE LATCHING PROFILE
ACTIONNEUR ROTATIF AVEC COURBE D'ENCLIQUETAGE VARIABLE

(30) Priorität: 10.07.2007 DE 102007032395
(43) Veröffentlichungstag der Anmeldung: 17.03.2010
(73) Patentinhaber: PREH GmbH, 97616 Bad Neustadt (DE)
(72) Erfinder: KRAMLICH, Andreas, 97424 Schweinfurt (DE)
(74) Vertreter: Bauer Vorberg Kayser Patentanwälte
(86) Internationale Anmeldenummer: PCT/EP2008/005622
(87) Internationale Veröffentlichungsnummer: WO 2009/007111

(56) Entgegenhaltungen:
- EP-A- 1 217 496
- EP-A- 1 795 990
- WO-A-02/088864
- DE-A1-102005 042 883
- DE-A1-102005 043 587
- DE-U1- 20 219 655

## Beschreibung

Die vorliegende Erfindung betrifft einen Drehsteller mit veränderbarem Rastverlauf nach dem Oberbegriff des Patentanspruchs 1.

Bei Drehstellern, insbesondere In Kraftfahrzeugen, ist es erwünscht, die Drehung des Drehstellers um ein bestimmtes Maß haptisch an den Bediener zurückzumelden, beispielsweise um das Überwinden eines Bedienschrittes anzuzeigen. Dazu sind Drehsteller mit einem Rastverlauf bekannt, bei dem ein Rastelement in eine Rastkontur eingreift. Nachteilig dabei ist jedoch, dass ein derartiger Drehsteller einen unveränderlichen Rastverlauf aufweist und somit nur eingeschränkt zur Bedienung mehrerer Funktionen, beispielsweise eines Bordcomputers, geeignet ist.

Aus der Offenlegungsschrift DE 100 29 191 A1 ist ein elektronisch gesteuerter Flüssigkeitsdrehknopf als haptisches Bedienelement bekannt, bei dem der Drehknopf des Drehstellers in einer magnetorheologischen Flüssigkeit verläuft, deren Viskosität über ein Magnetfeld gesteuert werden kann. Durch die Ansteuerung des Magnetfeldes ist es möglich, verschiedene Rastverläufe zu erzeugen. Ein derartiger Drehsteller weist einen komplexen Aufbau auf, Ist teuer in der Herstellung und bedarf einer aufwändigen Steuerung.

Die DE 202 19 655 U1 beschriebt eine Schalteinrichtung, insbesondere einen Drehsteller mit einer in einem Gehäuse drehbar gelagerten Stellwelle mit einem daran vorhandenen Bedienglied und zumindest eine auf die Stellwelle einwirkende, Haptik-erzeugende Dämpfungsanordnung, welche durch einen mit einer Kontrollvorrichtung verbundenen Aktuator aktivier- bzw, deaktivierbar ist. Die Dämpfungsanordnung enthält ein in Form einer Rotor/Stator-Kombination ausgebildetes Dämpfungselement, wobei der Rotor bezüglich des Stators gegen ein Dämpfungsmoment verdrehbar ist, welches durch ein zwischen Stator und Rotor vorhandenes Dämpfungsmedium erzeugt wird.

Es ist die Aufgabe der vorliegenden Erfindung, einen Drehsteller mit veränderbarem Rastverlauf bereitzustellen, der die Nachteile des Standes der Technik nicht aufweist.

Diese Aufgabe wird gelöst durch einen Drehsteller gemäß den Patentansprüchen 1 und 2. Vorteilhafte Ausgestaltungsformen sind den abhängigen Patentansprüchen zu entnehmen.

Ein Drehsteller mit veränderbarem Rastverlauf nach Patentanspruch 1 weist ein Gehäuse, einen Drehknopf, eine drehfest mit dem Drehknopf verbundene Drehwelle und mindestens zwei drehfest mit der Drehwelle verbundene Rastkonturen auf. Weiterhin weist der Drehsteller einen Träger pro Rastkontur auf, auf dem mindestens ein Rastelement angeordnet ist, das in die dem Träger zugeordnete Rastkontur eingreift, und der drehbar um die Drehwelle gelagert ist. Die Anzahl der Träger entspricht der Anzahl der Rastkonturen. Zusätzlich enthält der Drehsteller mindestens eine Arretiervorrichtung pro Träger, durch die der Träger gegenüber dem Gehäuse arretierbar ist, wobei die Arretiervorrichtung eine magnetische Kugelrasteinrichtung aufweist, wobei die magnetische Kugelrasteinrichtung mindestens einen Permanentmagneten, einen Elektromagneten auf einem ferromagnetischen Kern und eine Kugel, die in Eingriff mit einem Rastprofil in einem Träger bringbar ist, aufweist und wobei der Permanentmagnet beweglich in der Kugelrasteinrichtung angeordnet und zwischen zumindest zwei Endpositionen verfahrbar ist.

In einer alternativen Ausgestaltungsform nach Patentanspruch 2 weist der Drehsteller ein Gehäuse, einen Drehknopf, eine drehfest mit dem Drehknopf verbundene Drehwelle und mindestens zwei drehfest mit der Drehwelle verbundene Rastelemente auf. Bei einer Drehung des Drehknopfes bewegen sich die Rastelemente daher mit der Drehwelle mit. Weiterhin weist der Drehsteller einen Träger pro Rastelement auf, wobei an dem Träger eine Rastkontur angeordnet ist, in die das dem Träger zugeordnete Rastelement eingreift, und der Träger drehbar um die Drehwelle gelagert ist. Zusätzlich enthält der Drehsteller mindestens eine Arretiervorrichtung pro Träger, durch die der Träger gegenüber dem Gehäuse arretierbar ist. Die Anzahl der Träger entspricht bevorzugt der Anzahl der Rastelemente. Optional ist die Anzahl der Rastelemente größer als die Anzahl der Träger, wenn zwei Rastelemente in die Rastkontur des gleichen Trägers eingreifen.

Die Rastelemente stellen eine formschlüssige Verbindung zwischen den Rastkonturen, und damit dem Drehknopf, und den Trägern her. Sind alle Arretiervorrichtung deaktiviert, die Träger also nicht arretiert, so führt eine Drehung des Drehknopfes zu einer Drehung der Träger. Die Träger drehen sich mit der gleichen Winkelgeschwindigkeit wie der Drehknopf.

Ist eine Arretiervorrichtung aktiviert, so wird der zugehörige Träger gegenüber dem Gehäuse des Drehstellers fixiert. Einer Drehung des Drehknopfs wird eine Kraft entgegengesetzt, die in bekannter Weise von dem Rastelement und der Rastkontur erzeugt wird. Überwindet der Bediener diese Kraft, so drehen sich der Drehknopf und die Drehwelle relativ zum arretierten Träger. Das Rastelement bewegt sich über die Rastkontur und der Bediener erhält eine haptische Rückmeldung über die Drehung des Drehknopfs in Form einer Rast. Der Verlauf der Rast über dem Drehwinkel des Drehknopfes ist dabei Wesentlichen abhängig von der Ausgestaltung der Rastkontur.

Ist die Arretiervorrichtung eines anderen Trägers aktiviert, so wird dieser andere Träger gegenüber dem Gehäuse des Drehstellers fixiert. Bei der Drehung des Drehknopfes ergibt sich ein Rastverlauf, der im Wesentlichen von der Rastkontur abhängt, in die das am fixierten anderen Träger angeordnete Rastelement eingreift. Durch die Wahl des arretierten

Trägers ist somit der Rastverlauf veränderbar. Dazu sind bevorzugt die Rastkonturen und/oder die Rastelemente unterschiedlich ausgestaltet. Optional sind mehrere Träger gleichzeitig arretierbar, sodass sich der Rastverlauf als Überlagerung der einzelnen Rasten ergibt.

Bei der Rastkontur handelt es sich um eine Aneinanderreihung von Vertiefungen und Erhebungen, sodass sich beispielsweise ein Sägezahnprofil oder ein Wellenprofil ergibt. Bevorzugt bildet die Rastkontur einen geschlossenen Kreis. Je nach Ausgestaltung des Drehstellers befindet sich die Rastkontur an der Innenseite oder der Außenseite des Trägers. Die Anzahl der Rastpositionen pro vollständiger Umdrehung der Drehknopfes ist abhängig von der Anzahl der Vertiefungen der Rastkontur. Die Kraft zur Überwindung einer Rast ist unter anderem abhängig von der Höhe der Erhebungen in Bezug auf die Vertiefungen. Der Kraftverlauf der Rast ist abhängig von der Form der Flanken des Rastprofils. Bei dem Rastelement handelt es sich bevorzugt um eine federnd gelagerte Kugel oder eine Rastfeder.

Die Arretiervorrichtung ist bevorzugt ortsfest im Gehäuse angeordnet. Sie weist zum Beispiel einen Riegel auf, der beispielsweise über eine Zustelleinrichtung In eine Ausnehmung des der Arretiervorrichtung zugeordneten Trägers eingebracht oder aus der Ausnehmung ausgefahren wird. Die Arretiervorrichtung eine magnetische Kugelrasteinrichtung auf, wie sie im Folgenden beschrieben wird.

Die magnetische Kugelrasteinrichtung weist mindestens einen Permanentmagneten, einen Elektromagneten auf einem ferromagnetischen Kern und eine Kugel, die in Eingriff mit einem Rastprofil in einem Träger bringbar ist, auf. Dabei ist der Permanentmagnet beweglich in der Einrichtung angeordnet und zwischen zumindest zwei Endpositionen verfahrbar.

Der Permanentmagnet ist zwischen dem offenen Ende des ferromagnetischen Kerns und der Kugel angeordnet. Die Kugel besteht aus einem magnetischen oder magnetisierbaren Material, damit durch ein Magnetfeld eine Kraft auf die Kugel ausgeübt wird. In jeder seiner Endpositionen befindet sich der Permanentmagnet im Bereich des Endes eines Schenkels des ferromagnetischen Kerns. Das Magnetfeld des Permanentmagneten erstreckt sich in die Schenkel des ferromagnetischen Kerns und hält den Permanentmagneten damit In seiner Position.

Ein Positionswechsel des Permanentmagneten wird dadurch erreicht, dass der Elektromagnet bestromt wird und sich infolgedessen ein Magnetfeld im ferromagnetischen Kern ausbildet. Die Stromrichtung durch den Elektromagneten und damit die Richtung des Magnetfeldes im ferromagnetischen Kern wird so gewählt, dass sich an dem Schenkel, in dessen Bereich sich der Permanentmagnet befindet, der Magnetpol ausbildet, der dem dem ferromagnetischen Kern zugewandten Pol des Permanentmagneten entspricht. Dies führt zu einer Abstoßung des Permanentmagneten aus seiner aktuellen Lage in die andere Endposition. Bevorzugt ist der bewegliche Permanentmagnet derart geführt, dass ein Umkippen des Permanentmagneten verhindert wird. Umkippen bedeutet in diesem Zusammenhang, dass sich der Permanentmagnet derart dreht, dass dem ferromagnetischen Kern der andere Magnetpol zugewandt ist.

Die Kugel, die sich im Bereich des Magnetfelds des Permanentmagneten befindet, folgt der Bewegung des Permanentmagneten und ist so beispielsweise ebenfalls zwischen zwei Endpositionen verfahrbar. In einer Endposition ist die Kugel im Eingriff mit dem Rastprofil im Träger und blockiert so die Bewegung des Trägers zumindest in einer Richtung. In einer anderen Endposition ist die Kugel nicht im Eingriff mit dem Rastprofil. Durch die relative Nähe zwischen der Kugel und dem Permanentmagneten führt bereits ein vergleichsweise schwacher Permanentmagnet zu einer starken Magnetkraft auf die Kugel und somit zu einer hohen Vibrationsfestigkeit.

Bevorzugt ist der ferromagnetische Kern, der beispielsweise aus Eisen besteht, im Wesentlichen U-förmig ausgebildet. Es ist aber auch jede andere, insbesondere asymmetrische Form des ferromagnetischen Kerns möglich, ohne die Arretierfunktionalität einzuschränken.

Der auf dem ferromagnetischen Kern angeordnete Elektromagnet und der bewegliche Permanentmagnet bilden ein mechanisches, bi-stabiles Flip-Flop, wobei die Kugel der Position des Permanentmagneten folgt. Selbst wenn die Kugel im Rastprofil verklemmt ist, ist der Permanentmagnet verfahrbar. Ist zu einem späteren Zeitpunkt die Kugel nicht mehr verklemmt, so folgt sie dem Permanentmagneten und entfernt sich aus dem Eingriff mit dem Rastprofil.

Die vorliegende Erfindung soll anhand von vier Ausführungsbeispielen näher beschrieben werden. Dabei zeigt:
- Figur 1: eine erste Ausgestaltungsform eines erfindungsgemäßen Drehstellers mit drei Rastkonturen;
- Figur 2: eine zweite Ausgestaltungsform eines erfindungsgemäßen Drehstellers mit zwei Rastkonturen,
- Figur 3: eine dritte Ausgestaltungsform eines erfindungsgemäßen Drehstellers mit zwei Rastkonturen,
- Figur 4: eine vierte Ausgestaltungsform eines erfindungsgemäßen Drehstellers mit drei Rastkonturen,
- Figur 5: eine Detaildarstellung einer magnetischen Kugelrasteinrichtung und
- Figur 6: eine Detaildarstellung einer magnetischen Kugelrasteinrichtung im Eingriff mit einem Rastprofil.

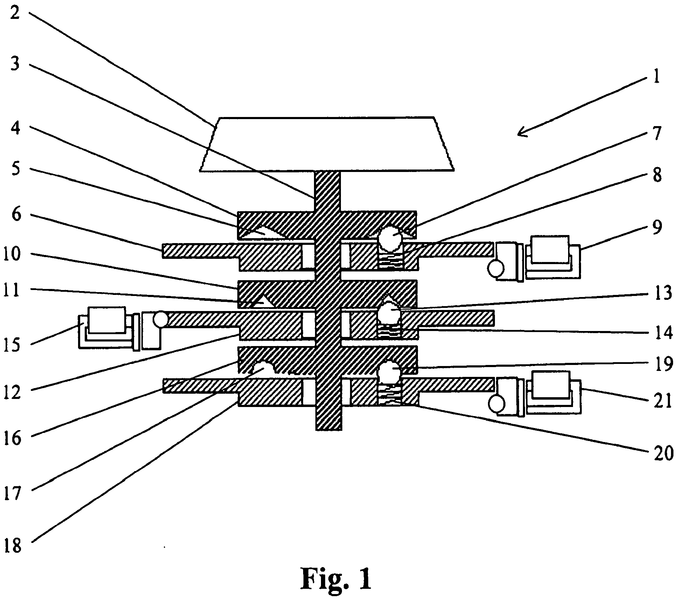

Die Figuren 1 bis 4 zeigen schematische Schnittdarstellungen verschiedener Ausführungsformen des erfindungsgemäßen Drehstellers 1 mit einem Drehknopf 2 und einer drehfest mit dem Drehknopf verbundenen Drehwelle 3. Das Gehäuse wurde aus Gründen der Übersichtlichkeit in den Figuren 1, 3 und 4 weggelassen. Wiederkehrende gleiche Elemente sind mit gleichen Bezugszeichen versehen.

Der Drehsteller 1 nach Figur 1 weist drei Rastkonturen 5, 11 und 17 auf, die jeweils in eine der Rastscheiben 4, 10 und 16 eingebracht sind. Die Rastscheiben 4, 10 und 16 sind drehfest mit der Drehwelle 3 verbunden oder einstückig mit der Drehwelle 3 ausgebildet. Drehbar um die Drehwelle 3 gelagert sind drei scheibenartige Träger 6, 12 und 18. Am Träger 6 ist über eine Feder 8 eine Kugel 7 gelagert, die in die Rastkontur 5 der Rastscheibe 4 eingreift. Am Träger 12 ist über eine Feder 14 eine Kugel 13 gelagert, die in die Rastkontur 11 der Rastscheibe 10 eingreift. Am Träger 18 ist über eine Feder 20 eine Kugel 19 gelagert, die in die Rastkontur 17 der Rastscheibe 16 eingreift.

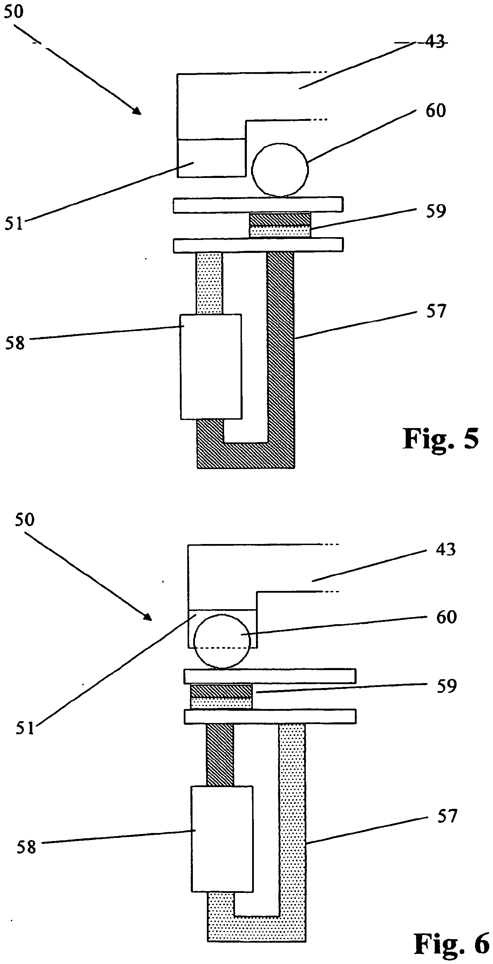

Ortsfest im Gehäuse des Drehstellers 1 angeordnet sind drei magnetische Kugelrasteinrichtungen 9, 15 und 21, die jeweils eine bewegliche Kugel enthalten. Die Kugeln sind, wie anhand der Figuren 5 und 6 beschrieben werden wird, in Eingriff mit Rastprofilen im äußeren Umfang der Träger 6, 12 und 18 bringbar. Greift eine Kugel in ein Rastprofil ein, so ist der entsprechende Träger arretiert. Dies bedeutet, dass der Träger keine Drehung im Gehäuse des Drehstellers 1 ausführen kann. Ist keine der Kugelrasteinrichtungen 9, 15 und 21 aktiviert, so sind alle drei Träger 6, 12 und 18 um die Drehwelle 3 drehbar. Wird der Drehknopf 2 gedreht, so üben die Kugeln 7, 13 und 19 Kräfte auf die Träger 6, 12 und 18 aus, sodass sich diese mit der gleichen Winkelgeschwindigkeit drehen wie der Drehknopf 2.

In der Figur 1 ist die Lage der Kugeln der Kugelrasteinrichtungen durch Kreise angedeutet. Vorliegend ist die Rasteinrichtung 15 aktiviert, also die Kugel der Rasteinrichtung 15 im Eingriff mit dem Rastprofil am Umfang des Trägers 12. Dadurch wird eine Drehung des Trägers 12 unterbunden und die Kugel 13 durchläuft bei einer Drehung des Drehknopfes 2 die Rastkontur 11 in der Rastscheibe 10. Zur Überwindung einer Rast drückt eine Flanke der Rastkontur 11 die Kugel 13 gegen die Kraft der Feder 14 in Richtung des Trägers 12. Dies ist für den Bediener der Drehstellers 1 haptisch als Rast wahrnehmbar.

Die Rastkonturen 5, 11 und 17 sind, wie in Figur 1 angedeutet, unterschiedlich ausgestaltet. Durch die unterschiedliche Ausgestaltung der Rastkonturen ändert sich der Kraftverlauf beim Überwinden einer Rast und/oder die Anzahl der Rasten pro Umdrehung des Drehknopfes 2. Durch die Wahl, welche Kugelrasteinrichtung aktiviert und damit welcher der Träger arretiert ist, ist somit der Rastverlauf des Drehstellers 1, also dessen haptische Kennlinie, veränderbar. Je nach gewünschtem Rastverlauf werden eine oder mehrere der Träger arretiert.

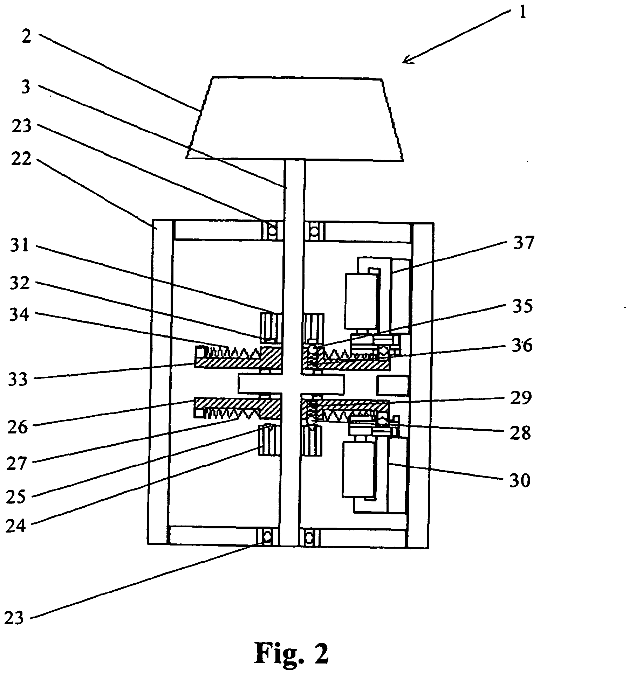

In einer zweiten Ausgestaltungsform gemäß Figur 2 ist die Drehwelle 3 über Kugellager 23 in einem Gehäuse 22 drehbar gelagert. Die Drehwelle 3 weist zwei in Achsrichtung der Drehwelle 3 beabstandete zylinderförmige Rastscheiben 24 und 31 auf, die konzentrisch zur Drehwelle 3 ausgebildet sind. In die einander zugewandten Stirnseiten der Rastscheiben 24 und 31 sind Rastkonturen 25 beziehungsweise 32 eingebracht, die unterschiedlich ausgestaltet sind.

Zwischen den Rastscheiben 24 und 31 sind zwei Träger 26 und 33 drehbar um die Drehachse 3 angeordnet. Der Träger 26 hält eine Kugel 28, die gegen die Kraft einer Feder 29 in Achsrichtung der Drehwelle 3 beweglich ist. Am äußeren Rand des scheibenartigen Trägers 26 ist ein ringförmiges Sägezahn-Rastprofil 27 angeordnet. Der Träger 33 hält eine Kugel 35, die gegen die Kraft einer Feder 36 in Achsrichtung der Drehwelle 3 beweglich ist. Am äußeren Rand des scheibenartigen Trägers 33 ist ein ringförmiges Sägezahn-Rastprofil 34 angeordnet.

Eine Kugel einer Kugelrasteinrichtung 30 ist in das Rastprofil 27 einbringbar, eine Kugel einer Kugelrasteinrichtung 37 ist in das Rastprofil 34 einbringbar. Ist eine Kugelrasteinrichtung aktiviert, also eine Kugel in ein Rastprofil eingebracht, so ist der zugehörige Träger arretiert, also seine Drehung gegenüber dem Gehäuse 22 blockiert.

Analog zum ersten Ausführungsbeispiel ist bei deaktivierten Kugelrasteinrichtungen 30 und 37 der Drehknopf 2 frei drehbar. Ist beispielsweise die Kugelrasteinrichtung 30 aktiviert, so greift deren Kugel in das Rastprofil 27 ein und arretiert den Träger 26. Wird nun der Drehknopf 2 gedreht, so bewegt sich die Kugel 28 über die Rastkontur 25 und wird dabei gegen die Kraft der Feder 29 verschoben. Dies nimmt der Bediener des Drehstellers 1 haptisch als Rastverlauf wahr. Analog ergibt sich ein Rastverlauf, wenn die Kugelrasteinrichtung 37 aktiviert ist und sich die Kugel 35 über die Rastkontur 32 bewegt. Sind die Rastkonturen 25 und 32 unterschiedlich ausgebildet, so ergeben sich unterschiedlich Rastverläufe. Sind beide Kugelrasteinrichtungen 30 und 37 aktiviert, so ergibt sich ein superponierter Rastverlauf.

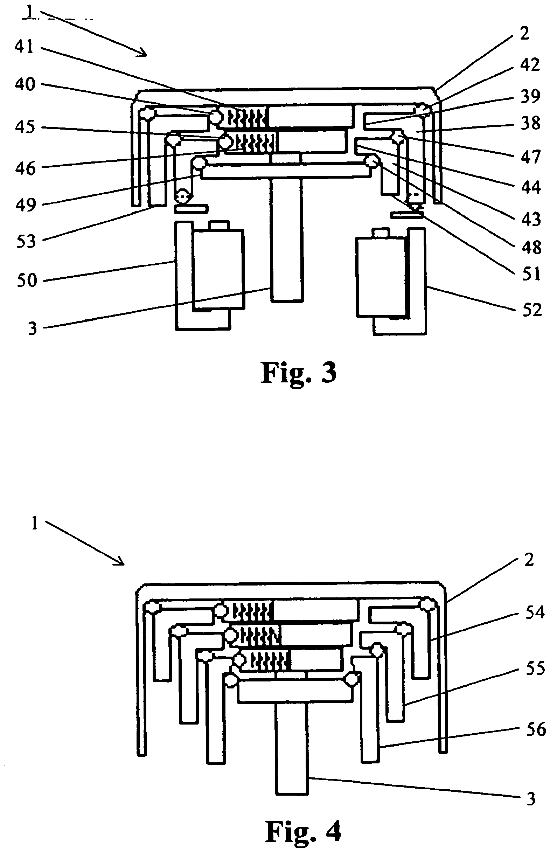

Figur 3 zeigt ein weiteres Ausführungsbeispiel, bei dem der Drehsteller 1 einen becherförmigen Drehknopf 2 aufweist. Zwei Träger 38 und 43 sind ebenfalls becherförmig ausgebildet und konzentrisch zueinander und zum Drehknopf 2 drehbar um die Drehwelle 3 angeordnet. Der Träger 38 ist über ein Kugellager 42 im Drehknopf 2 gelagert, der Träger 43 ist über ein Kugellager 47 im Träger 38 gelagert. Eine kreisförmige Haltescheibe 49, die sich senkrecht zur Drehwelle 3 erstreckt und durch deren Mittelpunkt die Drehwelle 3 verläuft, hält über ein Kugellager 48 den Träger 43 und damit auch den Träger 38.

Zwei Rastkugeln 40 und 45 sind drehfest mit der Drehwelle 3 verbunden, drehen sich also mit der gleichen Winkelgeschwindigkeit wie der Drehknopf 2. Die Rastkugeln 40 und 45 sind über Federn 41 beziehungsweise 46 gelagert, sodass sie, bezogen auf die Drehwelle 3, in radialer Richtung beweglich sind. Die Kugel 40 greift in eine Rastkontur 39 im Träger 38 ein, die Kugel 45 greift in eine Rastkontur 44 im Träger 43 ein. Die Rastkonturen 39 und 44 erstrecken sich entlang des Umfangs kreisförmiger Ausnehmungen in den Bodenflächen der Träger 38 beziehungsweise 43.

In den ringförmigen Rand des Trägers 38 ist ein Rastprofil 53 eingebracht, das mit einer Kugelrasteinrichtung 52 zusammenwirkt. In den ringförmigen Rand des Trägers 43 ist ein Rastprofil 51 eingebracht, das mit einer Kugelrasteinrichtung 50 zusammenwirkt. Wie in den vorangegangenen Ausführungsbeispielen sind bei deaktivierten Kugelrasteinrichtungen 50 und 52 die Träger 38 und 43 frei um die Drehwelle 3 drehbar. Wird der Drehknopf 2 gedreht, so nehmen die Kugeln 40 und 45 die Träger 38 beziehungsweise 43 mit.

Ist eine Kugelrasteinrichtung 50 oder 52 aktiviert, so greift eine Kugel in das zugehörige Rastprofil 51 beziehungsweise 53 ein, wodurch der Träger 43 beziehungsweise 38 arretiert wird. Ist die Kugelrasteinrichtung 50 aktiviert, so bewegt sich bei einer Drehung des Drehknopfes 2 die Kugel 45 über die Rastkontur 44 und erzeugt einen Rastverlauf, der vom Bediener des Drehstellers 1 als Drehhaptik wahrnehmbar ist. Ist die Kugelrasteinrichtung 52 aktiviert, so bewegt sich bei einer Drehung des Drehknopfes 2 die Kugel 40 über die Rastkontur 39 und erzeugt einen Rastverlauf, der bevorzugt von dem Rastverlauf, der von der Kugel 45 in Verbindung mit der Rastkontur 44 erzeugt wird, abweicht.

Eine weitere Ausführungsform des Drehstellers 1 nach Figur 4 unterscheidet sich vom Drehsteller nach Figur 3 dadurch, dass drei becherförmige Träger 54, 55 und 56 konzentrisch zueinander und zum Drehknopf 2 angeordnet sind. Die Träger 54, 55 und 56 sind um die Drehachse 3 drehbar und separat mittels nicht dargestellter Kugelrasteinrichtungen arretierbar. Ein nicht arretierter Träger wird bei einer Drehung des Drehknopfes 2 von einer zugehörigen Rastkugel mitgedreht, bei einem arretierten Träger bewegt sich die Rastkugel über eine Rastkontur am oder im Träger 54, 55 oder 56 und erzeugt einen entsprechenden Rastverlauf. Die Drehsteller 1 nach den Figuren 3 und 4 sind besonders kleinbauend.

Die Figuren 5 und 6 zeigen beispielhaft die Kugelrasteinrichtung 50 aus Figur 3. Die Kugelrasteinrichtung 50 besteht im Wesentlichen aus einem Elektromagneten 58 auf einem ferromagnetischen, U-förmigen Kern 57, einem Permanentmagneten 59 und einer magnetisierbaren Kugel 60. Der Permanentmagnet 59 ist zwischen zwei Endpositionen verschiebbar gelagert und so angeordnet und geführt, dass einer seiner Magnetpole dauerhaft in Richtung des ferromagnetischen Kerns 57 weist. In jeder seiner Endpositionen befindet sich der Permanentmagnet im Bereich eines der Schenkel am offenen Ende des ferromagnetischen Kerns 57. Die magnetisierbare Kugel 60 folgt aufgrund der Magnetkraft der Bewegung des Permanentmagneten 59. In den Figuren 5 und 6 ist der magnetische Nordpol punktiert und der magnetische Südpol schraffiert dargestellt.

In dem in Figur 5 dargestellten Zustand ist die Kugelrasteinrichtung 50 deaktiviert. Der Permanentmagnet 59 befindet sich in seiner ersten Endposition und die Kugel 60 ist nicht im Eingriff mit dem Rastprofil 51 des Trägers 43.

Wird die Kugelrasteinrichtung 50 aktiviert, so kehrt der Elektromagnet 58 das Magnetfeld im ferromagnetischen Kern 57 um. Es wirkt eine Magnetkraft auf den Permanentmagneten 59, die diesen in seine in Figur 6 dargestellte zweite Endposition bewegt. Die Kugel 60 folgt der Bewegung des Permanentmagneten 59 und gerät so in Eingriff mit dem Rastprofil 51 des Trägers 50. Der Träger 43 ist nun arretiert.

Die magnetischen Kugelrasteinrichtungen 9, 15, 21 30, 37 und 52 weisen im Wesentlichen den gleichen Aufbau auf wie die magnetische Kugelrasteinrichtung 50.

## Patentansprüche

1. Drehsteller (1) mit veränderbarem Rastverlauf, aufweisend ein Gehäuse (22), einen Drehknopf (2) und eine drehfest mit dem Drehknopf (2) verbundene Drehwelle (3), wobei der Drehsteller (1) folgendes aufweist:
- mindestens zwei drehfest mit der Drehwelle verbundene Rastkonturen (5, 11, 17; 25, 32),
- einen Träger (6, 12, 18; 26, 33) pro Rastkontur (5, 11, 17; 25, 32), auf dem mindestens ein Rastelement (7, 13, 19; 28, 35) angeordnet ist, das in die dem Träger (6, 12, 18; 26, 33) zugeordnete Rastkontur (5, 11, 17; 25, 32) eingreift, und der drehbar um die Drehwelle (3) gelagert ist, und
- mindestens eine Arretiervorrichtung (9, 15, 21; 30, 37) pro Träger (6, 12, 18; 26, 33), durch die der Träger (6, 12, 18; 26, 33) gegenüber dem Gehäuse (22) arretierbar ist,
**dadurch gekennzeichnet, dass**
- die Arretiervorrichtung eine magnetische Kugelrasteinrichtung (50) aufweist, wobei die magnetische Kugelrasteinrichtung mindestens einen Permanentmagneten (59), einen Elektromagneten (58) auf einem ferromagnetischen Kern (57) und eine Kugel (60), die in Eingriff mit einem Rastprofil in einem Träger bringbar ist, aufweist und wobei der Permanentmagnet (59) beweglich in der Kugelrasteinrichtung (50) angeordnet und zwischen zumindest zwei Endpositionen verfahrbar ist.

2. Drehsteller (1) mit veränderbarem Rastverlauf, aufweisend ein Gehäuse (22), einen Drehknopf (2) und eine drehfest mit dem Drehknopf (2) verbundene Drehwelle (3), wobei der Drehsteller (1) folgendes aufweist:
- mindestens zwei drehfest mit der Drehwelle (3) verbundene Rastelemente (40, 45),
- einen Träger (38, 43) pro Rastelement (40, 45), wobei an dem Träger (38, 43) eine Rastkontur (53, 51) angeordnet ist, in die das dem Träger (38, 43) zugeordnete Rastelement (40, 45) eingreift, und der Träger (38, 43) drehbar um die Drehwelle (3) gelagert ist, und
- mindestens eine Arretiervorrichtung (52, 50) pro Träger (38, 43), durch die der Träger (38, 43) gegenüber dem Gehäuse (22) arretierbar ist,
**dadurch gekennzeichnet, dass**
- die Arretiervorrichtung eine magnetische Kugelrasteinrichtung (50) aufweist, wobei die magnetische Kugelrasteinrichtung mindestens einen Permanentmagneten (59), einen Elektromagneten (58) auf einem ferromagnetischen Kern (57) und eine Kugel (60), die in Eingriff mit einem Rastprofil in einem Träger bringbar ist, aufweist und wobei der Permanentmagnet (59) beweglich in der Kugelrasteinrichtung (50) angeordnet und zwischen zumindest zwei Endpositionen verfahrbar ist.

3. Drehsteller (1) nach einem der Ansprüche 1 oder 2, **dadurch gekennzeichnet, dass** das Rastelement eine Rastfeder ist.

4. Drehsteller (1) nach einem der Ansprüche 1 oder 2, **dadurch gekennzeichnet, dass** das Rastelement eine federnd gelagerte Kugel (7, 13, 19; 28, 35; 40, 45) ist.

5. Drehsteller (1) nach einem der Ansprüche 1 bis 4, **dadurch gekennzeichnet, dass** die Arretiervorrichtung einen Riegel aufweist.

6. Drehsteller (1) nach einem der Ansprüche 1 bis 4, **dadurch gekennzeichnet, dass** die Arretiervorrichtung mindestens eine magnetische Kugelrasteinrichtung (9, 15, 21; 30, 37; 52, 50) aufweist.

## Claims

1. Rotating actuator (1) with a variable latching behavior, comprising a housing (22), a rotary knob (2) and a rotary shaft (3) non-rotatably connected to the rotary knob (2), the rotary actuator (1) comprising the following:
- at least two latching contours (5, 11 , 17; 25, 32) non-rotatably connected to the rotary shaft,
- one support (6, 12, 18; 26, 33) per latching contour (5, 11, 17; 25, 32), whereon at least one latching element (7, 13, 19; 28, 35) is disposed which latches into the latching contour (5, 11 , 17; 25, 32) associated with the support (6, 12, 18; 26, 33), and which is mounted so as to be rotatable about the rotary shaft (3), and
- at least one locking device (9, 15, 21; 30, 37) per support (6, 12, 18; 26, 33), by means of which the support (6, 12, 18; 26, 33) can be locked relative to the housing (22),
**characterised in that**
- the locking device comprises a magnetic ball latching device (50), wherein the magnetic ball latching device comprises at least one permanent magnet (59), an electromagnet (58) on a ferromagnetic core (57), and a ball (60) which can be brought into engagement with a latching profile in a support, and wherein the permanent magnet (59) is movably disposed in the ball latching device (50) and can be moved between at least two end positions.

2. Rotating actuator (1) with a variable latching behavior, comprising a housing (22), a rotary knob (2) and a rotary shaft (3) non-rotatably connected to the rotary knob (2), the rotary actuator (1) comprising the following:
- at least two latching elements (40, 45) non-rotatably connected to the rotary shaft (3),
- one support (38, 43) per latching element (40, 45), with a latching contour (53, 51) being disposed on the support (38, 43), into which the latching element (40, 45) associated with the support (38, 43) latches, and wherein the support (38, 43) is mounted so as to be rotatable about the rotary shaft (3), and
- at least one locking device (52, 50) per support (38, 43), by means of which the support (38, 43) can be locked relative to the housing (22), **characterised in that**
- the locking device comprises a magnetic ball latching device (50), wherein the magnetic ball latching device (50) comprises at least one permanent magnet (59), an electromagnet (58) on a ferromagnetic core (57), and a ball (60) which can be brought into engagement with a latching profile in a support, and wherein the permanent magnet (59) is movably disposed in the ball latching device (50) and can be moved between at least two end positions.

3. Rotating actuator (1) according to any one of the claims 1 or 2, **characterised in that** the latching element is a latching spring.

4. Rotating actuator (1) according to any one of the claims 1 or 2, **characterised in that** the latching element is a spring-mounted ball (7, 13, 19; 28, 35; 40, 45).

5. Rotating actuator (1) according to any one of the claims 1 to 4, **characterised in that** the locking device comprises a locking bar.

6. Rotating actuator (1) according to any one of the claims 1 to 4, **characterised in that** the locking device comprises at least one magnetic ball latching device (9, 15, 21; 30, 37; 52, 50).

## Revendications

1. Actionneur rotatif (1) à courbe d'encliquetage variable, présentant un boîtier (22), un bouton tournant (2) et un arbre rotatif (3) qui est solidaire en rotation dudit bouton tournant (2), ledit actionneur rotatif (1) comprenant :
- au moins deux contours d'encliquetage (5, 11, 17 ; 25, 32) solidaires en rotation de l'arbre rotatif,
- un support (6, 12, 18 ; 26, 33) par contour d'encliquetage (5, 11, 17 ; 25, 32), sur lequel est disposé au moins un élément d'encliquetage (7, 13, 19 ; 28, 35) venant en prise dans le contour d'encliquetage (5, 11, 17 ; 25, 32) associé au support (6, 12, 18 ; 26, 33), et lequel est logé à rotation autour de l'arbre rotatif (3), et
- au moins un dispositif d'arrêt (9, 15, 21 ; 30, 37) par support (6, 12, 18 ; 26, 33) par le biais duquel ledit support (6, 12, 18 ; 26, 33) peut être arrêté par rapport au boîtier (22),
**caractérisé par le fait que**
- ledit dispositif d'arrêt comprend un dispositif magnétique d'encliquetage à bille (50), ledit dispositif magnétique d'encliquetage à bille comprenant au moins un aimant permanent (59), un électroaimant (58) sur un noyau ferromagnétique (57) et une bille (60) qui peut être mise en prise avec un profil d'encliquetage dans un support, et ledit aimant permanent (59) étant disposé de manière mobile dans ledit dispositif d'encliquetage à bille (50) et étant déplaçable entre au moins deux positions extrêmes.

2. Actionneur rotatif (1) à courbe d'encliquetage variable, présentant un boîtier (22), un bouton tournant (2) et un arbre rotatif (3) qui est solidaire en rotation dudit bouton tournant (2), ledit actionneur rotatif (1) comprenant :
- au moins deux éléments d'encliquetage (40, 45) solidaires en rotation de l'arbre rotatif (3)
- un support (38, 43) par élément d'encliquetage (40, 45), sur ledit support (38, 43) étant disposé un contour d'encliquetage (53, 51) dans lequel s'engrène ledit élément d'encliquetage (40, 45) associé au support (38, 43), et ledit support (38, 43) étant logé à rotation autour de l'arbre rotatif (3), et
- au moins un dispositif d'arrêt (52, 50) par support (38, 43) par le biais duquel ledit support (38, 43) peut être arrêté par rapport au boîtier (22),
**caractérisé par le fait que**
- ledit dispositif d'arrêt comprend un dispositif magnétique d'encliquetage à bille (50), ledit dispositif magnétique d'encliquetage à bille comprenant au moins un aimant permanent (59), un électroaimant (58) sur un noyau ferromagnétique (57) et une bille (60) qui peut être mise en prise avec un profil d'encliquetage dans un support, et ledit aimant permanent (59) étant disposé de manière mobile dans ledit dispositif d'encliquetage à bille (50) et étant déplaçable entre au moins deux positions extrêmes.

3. Actionneur rotatif (1) selon l'une quelconque des revendications 1 ou 2, **caractérisé par le fait que** ledit élément d'encliquetage est un ressort d'encliquetage.

4. Actionneur rotatif (1) selon l'une quelconque des revendications 1 ou 2, **caractérisé par le fait que** ledit élément d'encliquetage est une bille (7, 13, 19 ; 28, 35 ; 40, 45) logée sur ressort.

5. Actionneur rotatif (1) selon l'une quelconque des revendications 1 à 4, **caractérisé par le fait que** ledit dispositif d'arrêt comprend un verrou.

6. Actionneur rotatif (1) selon l'une quelconque des revendications 1 à 4, **caractérisé par le fait que** ledit dispositif d'arrêt comprend au moins un dispositif magnétique d'encliquetage à bille (9, 15, 21 ; 30, 37 ; 52, 50).
